Europäisches Patentamt

European Patent Office

Office européen des brevets

(19)

(11) **EP 1 345 174 A1**

(12) **EUROPEAN PATENT APPLICATION**

(43) Date of publication:
**17.09.2003 Bulletin 2003/38**

(51) Int Cl.[7]: **G06T 7/20**

(21) Application number: **02005282.5**

(22) Date of filing: **12.03.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Stocker, Alan**<br>  **8002 Zürich (CH)**<br>• **Douglas, Rodney**<br>  **8803 Rüschlikon (CH)** |
| (71) Applicants:<br>• **Eidgenossisch Technische Hochschule Zurich**<br>  **8092 Zurich (CH)**<br>• **Universität Zürich**<br>  **8057 Zürich (CH)** | (74) Representative: **Blum, Rudolf Emil Ernst et al**<br>  **c/o E. Blum & Co**<br>  **Patentanwälte**<br>  **Vorderberg 11**<br>  **8044 Zürich (CH)** |

(54) **Method and apparatus for visual motion recognition**

(57)    Disclosed is a moving object (31) recognition system. The system generates an optical flow vector field (28) based on a two-dimensional brightness signal (24). The system employs a bi-directional optical flow neural network (27) extended with a motion selective neural network (5). The motion selective neural network (5) interacts with the optical flow neural network (27) by providing an attentional bias (12) for each of the optical flow neurons (3, 4). The motion selective neural network (5) is adjustable by input (15) to focus on a certain expected motion. The motion selective neural network (5) can be influenced by additional neural networks (37) which receive a bottom-up input (36) from the motion selective neural network (5).

Fig. 9

EP 1 345 174 A1

**Description**

The invention relates to a method and apparatus for visual motion recognition according to the preamble of the independent claims.

Systems for visual motion recognition are described in US 5,511,133 and in Stocker, A. and R. J. Douglas (1999), computation of smooth optical flow in a feedback connected analog network, in, M. S. Kearns, S. A. Solla, and D. A. Cohn (Eds.), Advances in Neural Information Processing Systems 11, Cambridge, MA, pp. 706-712, MIT Press.

Systems for visual motion recognition are used for obtaining information about moving patterns, such as velocity, position and configuration. The use of neural networks in such systems allows fast and in particular parallel processing of image data. Usually each neuron or unit of a neural network is assigned to a particular sampling position or pixel of the image. For motion detection generally two neural networks are employed, one network for x-directional motion and one network for y-directional motion. Both networks interact. The networks are designed such that the state of the neurons converge to an optical flow $(u, v)$, which is indicative of the velocity vector at a respective point of a moving pattern. The term 'indicative' means that the state of a particular neuron is an estimate of the actual velocity component.

The optical flow $\vec{v} = (u, v)$ can e.g. be obtained by minimizing the cost function

$$H(\vec{v}(x,y,t);\rho,\sigma)= \iint(F^2+\rho S +\sigma B)dxdy \tag{1}$$

where $F$, $S$ and $B$ are functions which are defined below. The weight of $F$, $S$ and $B$ is defined by the parameters $\rho$ and $\sigma$. The boundary condition of such networks is usually defined by

$$\vec{v}'(x, y, t) = 0 \ \textit{(along the boundary)} \tag{2}$$

The function $F$ is defined by:

$$F(\vec{v}(x,y,t))^2 =(E_x{\cdot}u+E_y{\cdot}v+E_t)^2 \tag{3}$$

where $E_x$, $E_y$, $E_t$ are the partial derivatives of the brightness E at the respective points of the input image data with respect to the x- and y-components and the time, and $u,v$ are the x- and y-components of the optical flow $(u,v)$. The function $S$ is defined by:

$$S(\vec{v}'(x, y, t))=(u_x^2+u_y^2+v_x^2+v_y^2) \tag{4}$$

where $u_x$, $u_y$, $v_x$, $v_y$ are the spatial gradients of the optical flow vector field. The function $B$ is defined by:

$$B(\vec{v}(x, y, t))=(u-u_0)^2+(v-v_0)^2 \tag{5}$$

where $(u_0, v_0)$ is a bias potential or reference motion.

The use of the term "input image data" in this document does not imply that the image information is supplied digitally. The information is preferably provided as an analog signal, for example as a voltage signal.

Existing systems are responsive to noise. Noise is erroneously interpreted as small moving objects. Existing systems often don't work reliably if there is more than one moving object. The velocity vector estimations are poor, particularly at the edges of moving patterns.

The problem to be solved by the present invention lies therefore in finding a system of the kind described above which avoids the disadvantages described above at least partially.

This problem is solved in claim 1 by adding a motion selective neuronal network. The motion selective neuronal network controls the optical flow network, in particular the local bias conductance of each optical flow neuron. By employing said motion selective network the system can be set up to put its attention on a certain expected motion. For example noise, which is usually not within the range of the expectation, is thereby eliminated.

Further preferred features and aspects of the present invention are described in the dependent claims as well as in the following description, which makes reference to the enclosed figures. These figures show:

Fig. 1 an schematic view of the networks and their interaction, input and output,
Fig. 2 one single unit of the bi-directional optical flow network,
Fig. 3 the interaction between the motion selective network and the x-directional optical flow network,
Fig. 4 an idealized optical flow field as generated by conventional optical flow networks,
Fig. 5 the idealized output of a motion selective network for an expected motion to the left,
Fig. 6 the idealized output of the system according to the invention for an expected motion to the left,
Fig. 7 the idealized output of a motion selective network for an expected motion to the right,
Fig. 8 the idealized output of the system according to the invention for an expected motion to the right, and
Fig. 9 a schematic view of the preferred embodiment of the invention, including a camera pointed towards moving sample objects,

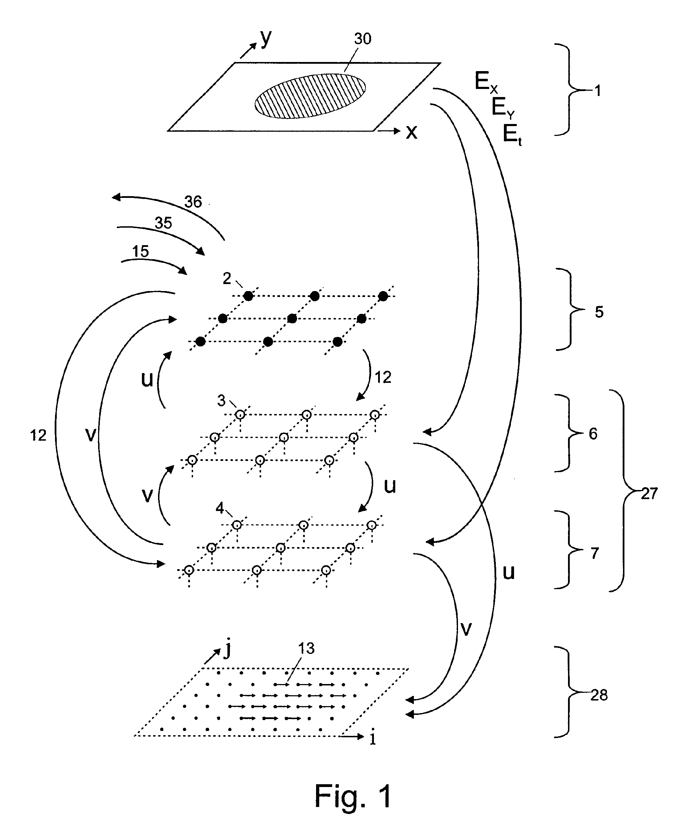

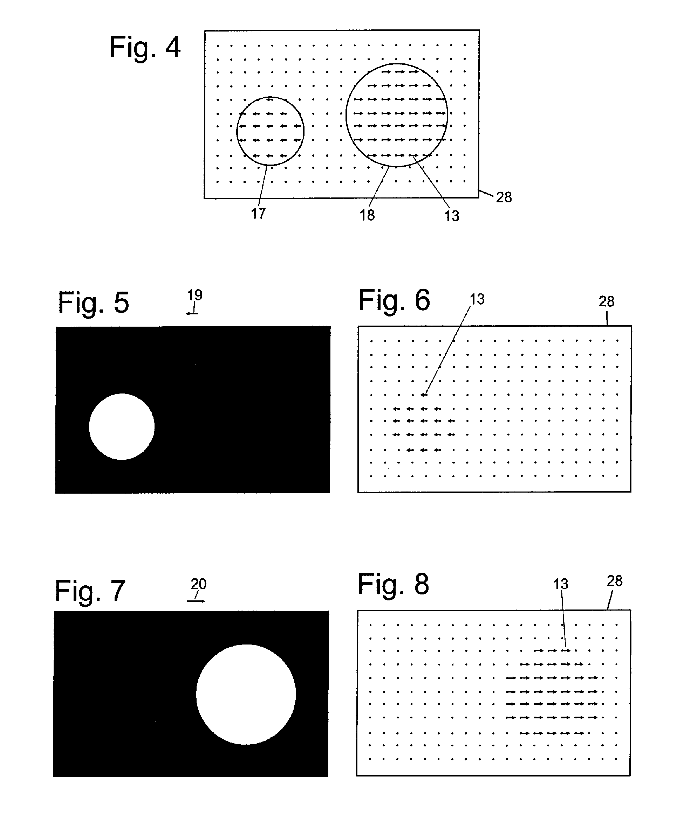

Fig. 1 shows a schematic view of an embodiment of the invention. Continuous input image data 1 are sampled at discrete positions $(i,j)$ to generate brightness or intensity values $E_{ij}(t)$. The spatial and temporal derivatives $E_x$, $E_y$, $E_t$ of the brightness $E$ are fed into an optical flow network 27. Generally optical flow networks are networks that have image information as an input and optical flow or velocity information as an output. In the preferred embodiment of the invention the optical flow network 27 is bi-directional and consists of two neural networks: An x-directional optical flow network 6 and a y-directional optical flow network 7. The neural networks are designed such that the states of the optical flow neurons 3, 4 converge to a value indicative of the components of a velocity vector of a moving pattern 30. There is a pair of optical flow neurons 3, 4 for each image pixel or discrete sampling position. The arrangement of the neurons is retinotopical. The output of the optical flow network 27 is an optical flow vector field 28 with one optical flow vector 13 for each pair of optical flow neurons 3, 4.
The bi-directional optical flow network 27 interacts with a motion selective network 5.
Generally motion selective networks have an optical flow vector field or velocity vector field as an input and a field of values indicating to which extent a selection criterion was fulfilled as an output. In the preferred embodiment of the invention the selection criterion is the similarity of the optical flow input with an expected motion 19, 20. The selection criterion can be changed dynamically if the motion selective network has an additional input 15 for parameters characterizing the selection criterion. For example if the selection criterion is the similarity with an expected motion 19, 20, these parameters comprise the components of the velocity vector $\vec{v}_{Model}$ of that expected motion 19, 20. The expected motion can also be characterized by a field of velocity vectors. An other example for such a parameter is the expected size $N_{max}$ of moving patterns as described below.
The motion selective network 5 is used to determine whether a certain moving pattern is of interest. The output of the motion selective network 5 provides a measure of the attention to be put on discrete positions of the image. In this manner the output provides an attentional bias 12, which is used to control the optical flow network 27, particularly to inhibit optical flow neurons 3, 4 at positions which are not of interest. Extending the conventional optical flow network 27 with a motion selective network 5 has the advantage that noise is not as easily misinterpreted as a moving object. Objects which are not of interest and are e.g. moving in a different direction than the objects of interest can be ignored by choosing the expected motion 19, 20 accordingly as described in the following on the basis of Fig. 4 to 8. The motion selective network 5 has the optical flow $u,v$ generated by the optical flow network 27 as an input. The attentional bias 12 is therefor with respect to the optical flow network 27 a feedback signal.
On top of the motion selective network 5, there can be one or more additional networks 37, which are not shown in Fig. 1. These additional networks 37 influence the motion selective network 5 by the top-down input 35. The additional networks 37 receive a bottom-up input 36, for example the attentional bias $A_{ij}$, from the motion selective network 5. These additional networks 37 are higher level networks performing recognition and/or control tasks at a higher level of abstraction.

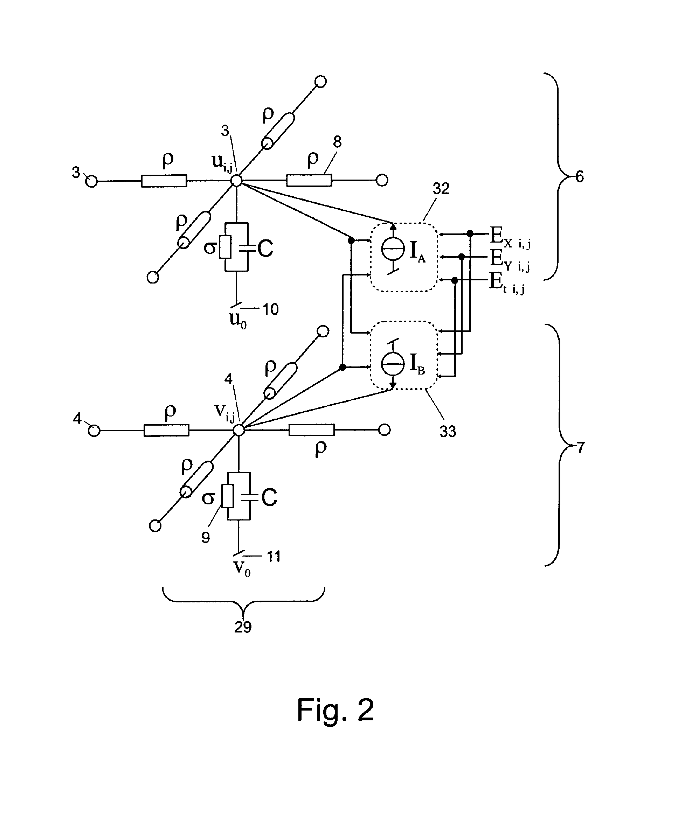

Fig. 2 shows one unit 29 of a bi-directional optical flow network 27. There is a total of $m \times n$ such units 29 in the network 27. A unit can be identified by its position $(i, j)$. Each unit corresponds to a particular pixel of the input image data 1. There are $m$ different values for $i$ and $n$ different values for $j$. Each unit 29 comprises an x-directional optical flow neuron 3 and an y-directional optical flow neuron 4. Each optical flow neuron 3, 4 is connected to four neighboring optical flow neurons 3, 4 with horizontal conductances 8. Each optical flow neuron 3, 4 is connected to a reference motion potential 10, 11 with a local bias conductance 9. The state $u_{ij}$ or $v_{ij}$ of each optical flow neuron 3, 4 converges to the reference motion potential 10, 11 with a rate depending among other factors on the local bias conductance 9. Each optical flow neuron 3, 4 receives an input current from a controllable current source 32, 33. The current of current sources 32, 33 depends on the spatial and temporal derivatives $E_x$, $E_y$, $E_t$ of the brightness $E$ of the image. It also depends on the state of both optical flow neurons 3, 4 of the unit 29. Depending on the sign of the current the controllable current source 32, 33 can also act as a current sink.
In the preferred embodiment of the invention the current sources are controlled according to the following formulas:

$$I_{A_{ij}} \propto -E_{x_{ij}}\left(E_{x_{ij}} u_{ij} + E_{y_{ij}} v_{ij} + E_{t_{ij}}\right) \qquad (6)$$

$$I_{B_{ij}} \propto -E_{y_{ij}}\left(E_{x_{ij}} u_{ij} + E_{y_{ij}} v_{ij} + E_{t_{ij}}\right) \qquad (7)$$

The dynamics of an optical flow network 27 consisting of such units 29 can be described by the following equations:

$$\dot{u}_{ij} = -\frac{1}{C}\left[ E_{x_{ij}}\left(E_{x_{ij}} u_{ij} + E_{y_{ij}} v_{ij} + E_{t_{ij}}\right) - \rho\left(u_{i+1,j} + u_{i-1,j} + u_{i,j+1} + u_{i,j-1} - 4u_{ij}\right) + \sigma\left(u_{ij} - u_0\right) \right] \qquad (8)$$

$$\dot{v}_{ij} = -\frac{1}{C}\left[ E_{y_{ij}}\left(E_{x_{ij}} u_{ij} + E_{y_{ij}} v_{ij} + E_{t_{ij}}\right) - \rho\left(v_{i+1,j} + v_{i-1,j} + v_{i,j+1} + v_{i,j-1} - 4v_{ij}\right) + \sigma\left(v_{ij} - v_0\right) \right] \qquad (9)$$

More general the equations can be written as

$$\dot{u}_{ij} = F_U\left(u_{ij}, v_{ij}, u_{neighbors}, E_{x_{ij}}, E_{y_{ij}}, E_{t_{ij}}\right) \qquad (10)$$

$$\dot{v}_{ij} = F_V\left(u_{ij}, v_{ij}, v_{neighbors}, E_{x_{ij}}, E_{y_{ij}}, E_{t_{ij}}\right) \qquad (11)$$

wherein $u_{ij}$ is the state of the x-directional optical flow neuron 3 at position $(i,j)$. $v_{ij}$ is the state of the y-directional optical flow neuron 3 at position $(i,j)$. $\dot{u}_{ij}$ is the temporal derivative of the state $u_{ij}$. $\dot{v}_{ij}$ is the temporal derivative of the state $v_{ij}$. $E_{xij}$, $E_{yij}$, $E_{tij}$ are the spatial and temporal derivatives of the brightness $E$ at position $(i,j)$. $\sigma$ is the bias conductance 9 which connects the x-directional optical flow neuron 3 with a bias voltage $u_0$ and which connects the y-directional optical flow neuron 7 with a bias voltage $v_0$. The reference motion $(u_0, v_0)$ can be changed to adapt the system to a certain constant shift of the total image, for example if the camera recording $E_{ij}$ is moved. $\rho$ is the horizontal conductance which connects the optical flow neuron 4 at position $(i,j)$ with its four nearest neighbors at positions $(i+1,j), (i-1,j), (i, j+1)$ and $(i,j-1)$. $C$ is the capacity by which each neuron is connected to a constant potential, for example $u_0$ or $v_0$.

Neurons at the boundaries of the $m \times n$ network have only three or two such nearest neighbors. $F_U$ and $F_V$ are functions. The conductances $\rho$ and $\sigma$ can be implemented using active or passive circuitry.

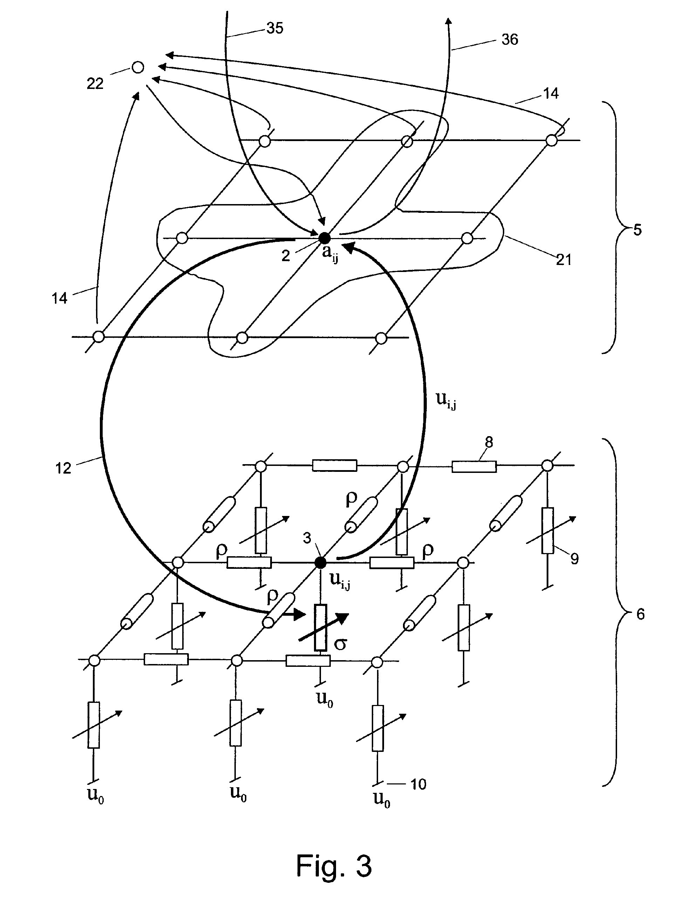

Fig. 3 shows the motion selective network and its interaction with the x-directional optical flow network 6. The interaction with the y-directional optical flow network 7 is of the same nature and is not shown. The motion selective network 5 comprises a motion selective neuron 2 with state $a_{ij}$ at each discrete position $(i,j)$. From each motion selective neuron 2 there originates an activation 14. The activation is directed to other motion selective neurons 2, to a global inhibitory unit 22, to control the bias conductance 9 of the corresponding optical flow neurons 3, 4, or to influence one or more additional neural networks 37 by their bottom-up input 36.

The activation 14 is generated as defined by a nonlinear activation function g:

$$A_{ij} = g(a_{ij}) \tag{12}$$

Wherein $A_{ij}$ is the activation originating from the neuron at position $(i,j)$ with state $a_{ij}$.

In the preferred embodiment of the invention the nonlinear activation function is sigmoid, particularly as follows:

$$A_{ij} = g(a_{ij}) = \frac{1}{2}\left( \tanh\left( \frac{a_{ij}}{a_0} \right) + 1 \right) \tag{13}$$

In the preferred embodiment of the invention all motion selective neurons 2 take the same effect on the global inhibitory unit 22. In the preferred embodiment of the invention the dynamics of the motion selective network 5 are defined as follows:

$$\dot{a}_{ij} =$$

$$-\frac{1}{C}\left[ \frac{a_{ij}}{R} + (\alpha + \beta)\sum_{kl} A_{kl} - \alpha A_{ij} - \beta N_{\max} - \gamma \sum_{neighbors} A_{neighbors} - \delta(\vec{v}_{ij} \cdot \vec{v}_{Model}) \right] \tag{14}$$

wherein

$$\vec{v}_{ij} = \begin{pmatrix} u_{ij} \\ v_{ij} \end{pmatrix} \tag{15}$$

and $C$ is a constant, $R$ is the input resistance and $\alpha$, $\beta$, $\gamma$ and $\delta$ are constants. $(\alpha+\beta)$ is a measure of the weight of the global inhibitory unit 22. $\alpha$ is a measure of the self-excitation of the motion selective neuron 2. $\vec{v}_{Model}$ is the expected motion 19, 20.

The scalar product $-\delta(\vec{v}_{ij} \cdot \vec{v}_{Model})$ in formula (14) causes the motion selective network 5 to select optical flow which is similar to the expected motion $\vec{v}_{Model}$. The scalar product can be replaced by other terms, in particular a norm $-\delta\|\vec{v}_{ij}\|$. In this case the motion selective network 5 selects fast patterns, independent of their direction.

The motion selective network 5 is a multiple-winner-take-all network (mWTA-network). Such networks are similar to conventional winner-take-all networks (WTA-networks), with the exception that the total activity is forced to $N_{\max}$, the number of winners. In this application the total activity $N_{\max}$ corresponds to the expected size of the moving pattern or to the size of attention. While $\vec{v}_{Model}$ allows to direct the attention of the system to a certain direction and velocity of motion, $N_{\max}$ allows to adjust the system to focus on moving objects 31 of a certain size.

More generally the dynamics of the motion selective network 5 can be described by the formula:

$$\dot{a}_{ij} = Z(g_1(a_{ij}) + g_2(a_{neighbors1}) + g_3(a_{neighbors2}), u_{ij}, v_{ij}, I_{ij}) \tag{16}$$

Wherein $g_1, g_2, g_3$ and $Z$ are different, non-constant functions. $Z$ is such that the state of network converges for constant $u$ and $v$. $a_{neighbors1}$ is a set of the states $a_{kl}$ of motion selective neurons 2 in a first defined neighborhood 21 around position $(i,j)$. In a preferred embodiment of the invention the set comprises only the four nearest neighbors at positions $(i+1,j)$, $(i-1,j)$, $(i,j+1)$ and $(i,j-1)$. $a_{neighbors2}$ is a set of the states $a_{kl}$ of motion selective neurons 2 in a second defined neighborhood. The second defined neighborhood usually comprises all neurons of the first defined neighborhood and is therefore bigger. In a preferred embodiment of the invention the second neighborhood comprises all motion selective neurons 2 in the network 5. $u_{ij}$, $v_{ij}$ is with respect to the motion selective network a bottom-up input 34, while $I_{ij}$ is a top-down input 35. In the preferred embodiment of the invention $I_{ij}$ is dynamic and is a function of values provided by one or more additional networks 37.

The bias conductances 9 at each position $(i, j)$ of the optical flow network 6 and 7 are controlled by the activation 14 of the corresponding motion selective neuron 2 as defined by the formula:

$$\sigma_{ij} = \sigma_1 + (1-A_{ij})\sigma_2 \tag{17}$$

wherein $\sigma_{ij}$ is the bias conductance 9 of a optical flow neuron 3, 4 at position $(i,j)$, $\sigma_1$ is a minimal bias conductance and $\sigma_1 + \sigma_2$ is a maximal bias conductance. The relationship can generally be defined by any formula:

$$\sigma_{ij} = f(A_{ij}) \tag{18}$$

In an implementation or circuit of the neural network 6, 7 the controllable bias conductance 9 is usually not a resistor. Instead it is an active element, controllable by a voltage and implemented as an arrangement of transistors, for example FETs, as well known to persons skilled in the art.

Fig. 4 shows an idealized optical flow vector field 28 as generated by conventional ideal optical flow networks without a particular focus of attention. A first pattern 17 is moving to the left, a second pattern 18 is moving to the right.

Fig. 5 shows the idealized output or activation of a motion selective network 5 for an expected motion 19 to the left. Black indicates that the optical flow in this region is to be suppressed. White indicates the detection of a moving pattern with the characteristics the system is tuned for. The output shown in the diagram is simplified in that it takes only two discrete values, illustrated in black and white. The output of the actual system takes continuos values.

Fig. 6 shows the idealized output of the system according to the invention for an expected motion 19 to the left. The optical flow vector field 28 shows basically only the pattern 17 moving similar to the expected motion 19. The pattern 18 which is moving in the opposite direction is ignored and without effect on the output optical flow vector field 28.

Fig. 7 shows the idealized output of a motion selective network 5 for an expected motion 20 to the right. Black indicates that the optical flow in this region is to be ignored.

Fig. 8 shows the output of the system according to the invention for an expected motion 20 to the right. The optical flow vector field 28 shows only the pattern 18 moving similar to the expected motion 19, while the pattern 17 is ignored.

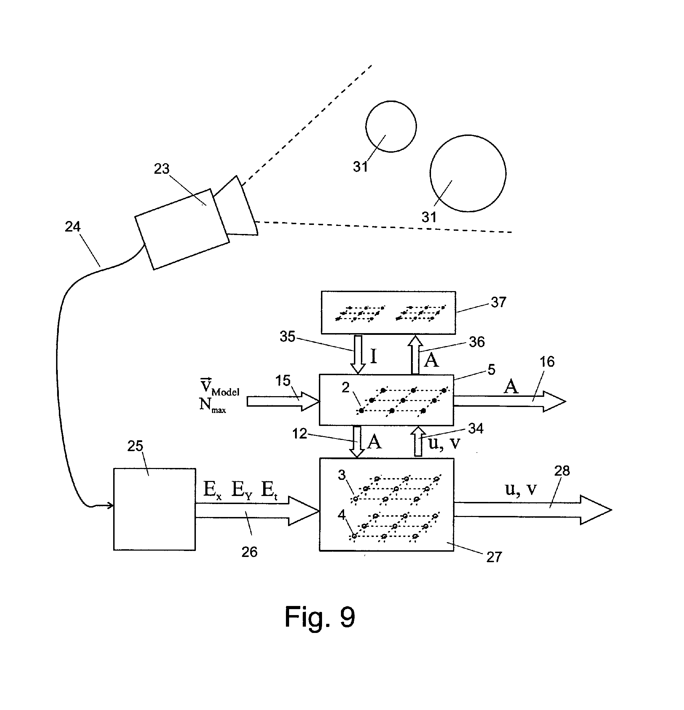

Fig. 9 shows a schematic view of the preferred embodiment of the invention, including a camera 23 pointed towards moving sample objects 31. The camera 23, particularly a CCD-camera, produces a two-dimensional brightness signal 24. Input stage 25 calculates spatial and temporal derivatives 26 of the brightness. The two dimensional optical flow network 27 generates an optical flow vector field 28 based on these derivatives 26. The optical flow network 27 is biased by the selective network 5, which generates an attentional bias 12 based on a dynamic bottom up input 34, which is in particular an optical flow vector field, and an input 15, which is a selection criterion. The selection criterion is for example provided by a vector $\vec{v}_{Model}$ which characterizes an expected motion 19, 20 and a number $N_{max}$ relating to the expected size of moving objects. The motion selective network can be enhanced by one or more additional networks 37 which influence the motion selective network 5 by a top-down input 35, in particular an input $I_{ij}(t)$ for each motion selective neuron 2. The additional neural networks 37 may receive a bottom-up input 36 from the motion selective network 5, in particular an attentional bias. The additional neural networks 37 do not necessarily have the same number, density and topography of neurons as the motion selective network 5. The input or activation $I_{ij}(t)$ of a motion selective neuron 2 at position $(i,j)$ is in particular a function of values provided by one or more of the additional networks 37.

In systems for visual motion recognition with optical neural networks the term "bottom-up" is generally used for "towards a higher level of abstraction". "top-down" is used for "towards a lower level of abstraction". The lowest level of abstraction within the system is the input image data provided by the camera.

The neural networks 5, 27, 37 can be implemented as analog circuits. An example of such circuits is described in the publication Stocker, A. and R. J. Douglas (1999), computation of smooth optical flow in a feedback connected analog network, in M. S. Kearns, S. A. Solla, and D. A. Cohn (Eds.), Advances in Neural Information Processing Systems 11, Cambridge, MA, pp. 706-712, MIT Press.

The neural networks 5, 27 can also be implemented using a computer system. The behavior of the neural networks is simulated with a special software. Better performance in the simulation of neural networks can be achieved by using parallel computer systems.

The output of the system is the optical flow vector field 28 and attentional bias matrix 16. This is an advantage over conventional systems which have usually only the optical vector field output. The outputs are used for example for recording, visualization or further processing by other components or systems such as controllers. Depending on the application only one of the two outputs 28, 16 may actually be used.

Even though the system is designed mainly for a certain number of $m \times n$ image pixels or units the number of units may be changed at certain stages of the system, in particular by resampling. Especially the input stage 25 will produce better values for the derivatives $E_x$, $E_y$ and $E_t$ if the input provided by the camera 23 has a higher resolution than the output required for the optical flow network 27.

Even though, in the following, the invention is primarily claimed in terms of an apparatus, it must be noted that the applicant reserves the right to claim the invention with a corresponding set of method claims.

**Claims**

1. Apparatus for visual motion recognition based on input image data (1) comprising an optical flow network (27) to which said input image data (1) is applied and which generates an optical flow vector field (28), wherein said optical flow network (27) comprises optical flow neurons (3, 4) which are connected to a reference motion potential (10, 11) over local bias conductances (9), **characterized by** a motion selective network (5), which generates an attentional bias (12, 16),
   wherein said attentional bias (12) is used to control said local bias conductances (9) of said optical flow network (27).

2. Apparatus of claim 1 wherein said attentional bias (12) is generated based on said optical flow vector field (28).

3. Apparatus of one of the preceding claims wherein said motion selective network (5) has a changeable selection criterion.

4. Apparatus of claim 3, wherein said motion selective network (5) comprises an input (15) for said changeable selection criterion.

5. Apparatus of one of the claims 3 or 4, wherein said changeable selection criterion comprises the expected size of a moving pattern or the size of attention.

6. Apparatus of one of the claims 3 to 5, wherein said changeable selection criterion comprises the similarity of an optical flow with an expected motion (19, 20).

7. Apparatus of claims 4 and 6, wherein said input (15) for said changeable selection criterion comprises a vector or a vector field indicative of said expected motion (19, 20).

8. Apparatus of one of the preceding claims wherein the motion selective network (5) comprises motion selective neurons (2) and has the dynamics:

$$\dot{a}_{ij} = Z(g_1(a_{ij})+g_2\ (a_{neighbors1})+g_3(a_{neighbors2}),\ u_{ij}\ ,\ v_{ij})$$

   wherein $g_1,g_2,g_3$ and $Z$ are different, non constant functions, $a_{ij}$ is the state of the motion selective neuron (2) at position $(i,j)$, $\dot{a}_{ij}$ is the temporal derivative of the state of the motion selective neuron (2) at position $(i,j)$, $a_{neighbors1}$ is a set of the states of motion selective neurons (2) in a first defined neighborhood (21) around position $(i,j)$, $a_{neighbors2}$ is the set of the states of motion selective neurons (2) in a second defined neighborhood around position $(i,j)$ and $u_{ij}$, $v_{ij}$ are the states of the said optical flow neurons (3, 4) at position $(i,j)$.

9. Apparatus of claim 8 wherein said first defined neighborhood (21) of a motion selective neuron (2) at position $(i,j)$ comprises only the four nearest neighbors at positions $(i+1,j)$, $(i-1,j)$, $(i,j+1)$ and $(i,j-1)$.

10. Apparatus of one of the claims 8 or 9 wherein said second defined neighborhood comprises all motion selective neurons (2) of said motion selective network (5).

11. Apparatus of one of the claims 8 to 10 wherein said motion selective network (5) is a multiple-winner-take-all network and in particular wherein the number of winners is changeable to select a certain size of attention.

12. Apparatus of one of the claims 8 to 11 wherein said motion selective neurons (2) of said motion selective network (5) comprise means for generating an activation (14) defined by a nonlinear activation function:

$$A_{ij} = g(a_{ij})$$

wherein $A_{ij}$ is the activation (14) originating from the motion selective neuron (2) at position $(i,j)$ and $g$ is the activation function.

13. Apparatus of claim 12 wherein the dynamics of said motion selective network (5) are defined by one of the following formulas:

$$\dot{a}_{ij} = -\frac{1}{C}\left[\frac{a_{ij}}{R} + (\alpha+\beta)\sum_{ij} A_{ij} - \alpha A_{ij} - \beta N_{\max} - \gamma \sum_{neighbors} A_{neighbors} - \delta(\vec{v}_{ij} \cdot \vec{v}_{Model})\right]$$

$$\dot{a}_{ij} = -\frac{1}{C}\left[\frac{a_{ij}}{R} + (\alpha+\beta)\sum_{ij} A_{ij} - \alpha A_{ij} - \beta N_{\max} - \gamma \sum_{neighbors} A_{neighbors} - \delta\|\vec{v}_{ij}\|\right]$$

wherein $C$ is a constant, $R$ is the input resistance and $\alpha, \beta, \gamma$ and $\delta$ are constants, $N_{\max}$ is the number of winners in a winner-take-all-network, and $A_{neighbors}$ is a set of activations (14) originating from motion selective neurons (2) in said first defined neighborhood (21) of the motion selective neuron (2) at position $(i,j)$, $\vec{v}_{Model}$ is an expected motion (19, 20) and $\vec{v}_{ij}$ is an optical flow vector (13) defined by the output $u_{ij}$, $v_{ij}$ of the optical flow network (27) as follows:

$$\vec{v}_{ij} = \begin{pmatrix} u_{ij} \\ v_{ij} \end{pmatrix}$$

14. Apparatus of one of the claims 12 or 13 wherein the nonlinear activation function g is sigmoid and in particular $g$ is defined by:

$$A_{ij} = g(a_{ij}) = \frac{1}{2}\left(\tanh\left(\frac{a_{ij}}{a_0}\right) + 1\right)$$

wherein $a_0$ is a bias value of the state of the motion selective neurons (2).

**15.** Apparatus of one of the claims 12 to 14, wherein said local bias conductances (9) of said optical flow network (27) are controllable by said motion selective network (5) as defined by the formula:

$$\sigma_{ij} = f(A_{ij})$$

particularly as defined by the formula:

$$\sigma_{ij} = f(A_{ij}) = \sigma_1 + (1 - A_{ij})\sigma_2$$

wherein $\sigma_{ij}$ is said local bias conductance (9) of the optical flow neuron (3, 4) at position $(i,j)$, $\sigma_1$ is a constant minimum bias conductance value and $\sigma_1 + \sigma_2$ is a constant maximum bias conductance value.

**16.** Apparatus of one of the preceding claims wherein said motion selective network (5) comprises a global inhibitory unit (22) which is activatable by all of said motion selective neurons (2), and in particular wherein each motion selective neuron (2) is connected for receiving input from said inhibitory unit (22).

**17.** Apparatus of one of the preceding claims wherein said input image data (1) is a brightness signal (24) containing a time and position dependent brightness $E_{ij}(t)$.

**18.** Apparatus of claim 17 comprising means for generating spatial and temporal derivatives $E_x, E_y, E_t$ of said brightness $E_{ij}(t)$, wherein in particular said means provide an input for said optical flow network (27).

**19.** Apparatus of one of the preceding claims wherein said optical flow network (27) comprises two neural networks (6, 7), one for an x-dimension and one for an y-dimension, wherein each x-directional optical flow neuron (3) at a position $(i,j)$ has a state $u_{ij}$ and each y-directional optical flow neuron (4) at a position $(i,j)$ has a state $v_{ij}$, wherein $u_{ij}$ and $v_{ij}$ are indicative of the velocity of a pattern (17, 18) at position $(i,j)$ moving at a given velocity.

**20.** Apparatus of claims 18 and 19 wherein the dynamics of said optical flow network (27) are defined by the formulas:

$$\dot{u}_{ij} = -\frac{1}{C}\left[ E_{x_{ij}}\left( E_{x_{ij}} u_{ij} + E_{y_{ij}} v_{ij} + E_{t_{ij}} \right) - \right.$$

$$\left. \rho\left(u_{i+1,j} + u_{i-1,j} + u_{i,j+1} + u_{i,j-1} - 4u_{ij}\right) + \sigma\left(u_{ij} - u_0\right) \right]$$

$$\dot{v}_{ij} = -\frac{1}{C}\left[ E_{y_{ij}}\left( E_{x_{ij}} u_{ij} + E_{y_{ij}} v_{ij} + E_{t_{ij}} \right) \right.$$

$$\left. - \rho\left(v_{i+1,j} + v_{i-1,j} + v_{i,j+1} + v_{i,j-1} - 4v_{ij}\right) + \sigma\left(v_{ij} - v_0\right) \right]$$

wherein $\dot{u}_{ij}$ is the temporal derivative of the state $u_{ij}$ of the x-directional optical flow neuron (3) at position $(i,j)$ and $\dot{v}_{ij}$ is the temporal derivative of the state $v_{ij}$ of the y-directional optical flow neuron (4) at position $(i,j)$ and $u_0, v_0$ is the reference motion potential (10, 11).

**21.** Apparatus of one of the preceding claims, comprising one or more additional networks (37), which receive a bottom-up input (36) from the motion selective network (5) and which provide a top-down input (35) for the motion selective network (5), in particular to control the motion selective network (5) dynamically.

**22.** Apparatus of claim 8 and claim 21 wherein each motion selective neuron (2) at position $(i,j)$ receives an activation

$I_{ij}(t)$, wherein the activation $I_{ij}(t)$ is a function of values provided by one or more of said additional networks (37).

23. Apparatus of one of the preceding claims wherein at least one of the neural networks (5, 6, 7) is implemented as an analog circuit.

24. Apparatus of one of the preceding claims wherein at least one of the neural networks (5, 6, 7) is implemented with a computer system, particularly with a parallel computer system, comprising hardware and software, particularly comprising a neural network simulation software.

25. Method for determining an optical flow vector field (28) based on input image data (1), **characterized by** the steps of:

   - Applying the input image data (1) to an optical flow network (27), particularly a bi-directional neural network comprising pairs of optical flow neurons (3, 4), where each of said optical flow neurons (3, 4) is connected to a reference motion potential (10, 11) over a local bias conductance (9), generating said optical flow vector field (28),
   - Applying said optical flow vector field (28) to a motion selective network (5), which generates an attentional bias (12),
   - Using said attentional bias (12) to control said local bias conductances (9) of said optical flow network (27).

Fig. 1

Fig. 2

Fig. 3

Fig. 4

Fig. 5

Fig. 6

Fig. 7

Fig. 8

Fig. 9

**European Patent Office**

**EUROPEAN SEARCH REPORT**

Application Number

EP 02 00 5282

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 5 283 839 A (SPORNS OLAF ET AL) 1 February 1994 (1994-02-01) * claim 1 * --- | 1,2,6,7, 25 | G06T7/20 |
| Y | HUTCHINSON J ET AL: "COMPUTING MOTION USING ANALOG AND BINARY RESISTIVE NETWORKS" COMPUTER, IEEE COMPUTER SOCIETY, LONG BEACH., CA, US, US, vol. 21, no. 3, 1 March 1988 (1988-03-01), pages 52-63, XP000005122 ISSN: 0018-9162 * figure 2B * --- | 1,2,6,7, 25 | |
| A | US 5 511 133 A (SHIMIZU MASAKO ET AL) 23 April 1996 (1996-04-23) * claim 1; figure 1 * ----- | 18-20 | |

TECHNICAL FIELDS SEARCHED (Int.Cl.7)

G06T

The present search report has been drawn up for all claims

| Place of search | Date of completion of the search | Examiner |
|---|---|---|
| THE HAGUE | 28 November 2002 | Chateau, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 02 00 5282

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2002

| Patent document cited in search report | | Publication date | Patent family member(s) | | Publication date |
|---|---|---|---|---|---|
| US 5283839 | A | 01-02-1994 | AT | 177859 T | 15-04-1999 |
| | | | AU | 9172591 A | 17-08-1992 |
| | | | CA | 2099501 A1 | 01-07-1992 |
| | | | DE | 69131020 D1 | 22-04-1999 |
| | | | DE | 69131020 T2 | 11-11-1999 |
| | | | EP | 0565613 A1 | 20-10-1993 |
| | | | JP | 6506785 T | 28-07-1994 |
| | | | JP | 3171200 B2 | 28-05-2001 |
| | | | WO | 9212500 A1 | 23-07-1992 |
| US 5511133 | A | 23-04-1996 | JP | 4241077 A | 28-08-1992 |
| | | | EP | 0496108 A2 | 29-07-1992 |

For more details about this annex : see Official Journal of the European Patent Office, No. 12/82